# EUROPÄISCHE PATENTSCHRIFT

(11) **EP 2 781 406 B1**
(45) Veröffentlichungstag und Bekanntmachung des Hinweises auf die Patenterteilung: **26.09.2018**
(21) Anmeldenummer: 14157582.9
(22) Anmeldetag: 04.03.2014
(51) Int. Cl.: B60P 7/08

(54) **Zurrgurtbefestigung an einer Ladefläche**
Fixing for lashing straps on a loading area
Fixation de sangle d'amarrage à une surface de chargement

(30) Priorität: 19.03.2013 DE 102013102801
(43) Veröffentlichungstag der Anmeldung: 24.09.2014
(73) Patentinhaber: F. Hesterberg & Söhne GmbH & Co. KG, 58256 Ennepetal (DE)
(72) Erfinder: Röhrig, Michael Armin, 42477 Radevormwald (DE)
(74) Vertreter: Bungartz Christophersen Partnerschaft mbB Patentanwälte

(56) Entgegenhaltungen:
- EP-A2- 0 179 733
- DE-U1- 9 415 316
- US-A- 5 788 437

## Beschreibung

Die Erfindung betrifft eine Zurrgurtbefestigung an einer Ladefläche, vorzugsweise einer Nutzfahrzeug-Ladefläche, mit einer durch eine Öffnung oder Ausnehmung in einem Profil, welches Teil der Ladefläche ist, hindurchführbaren Zurröse, die als geschlossener Ring auf einem unteren Ringabschnitt, einem oberen Ringabschnitt sowie vertikalen Ringabschnitten ausgebildet ist, und einem aus einem Befestigungsbereich und einem Widerlagerbereich bestehenden Halter, wobei der Befestigungsbereich an einer Wand des Profils lösbar befestigbar ist, vorzugsweise durch Verschrauben, der Befestigungsbereich an seinem oberen Ende mit dem Widerlagerbereich verbunden ist, der Widerlagerbereich ein nach unten offenes Widerlager zur Anlage des unteren Ringabschnitts bei auf Zug belasteter Zurröse aufweist, und der Widerlagerbereich in Verlängerung des Widerlagers jeweils einen Durchtritt für den vertikalen Ringabschnitt aufweist.

Im Transportwesen werden zur Sicherung von Stückgütern gegen ein Verrutschen Zurrgurtbefestigungen verwendet, die im Bereich der Ladefläche angeordnet sind. Durch jede Zurrgurtbefestigung lässt sich ein zur Aufnahme von Zugkräften geeigneter, über die zu sichernde Ladung geführter Ladungssicherungsgurt hindurchführen. Dieser wir anschließend mittels geeigneter Spannmittel verzurrt, und sichert so die Ladung.

Eine gattungsgemäße Zurrgurtbefestigung ist aus der DE 94 15 316 U1 bekannt. Die Zurröse ist als geschlossener Ring gestaltet und besteht aus einem unteren Ringabschnitt, einem oberen Ringabschnitt sowie vertikalen Ringabschnitten. Gehalten wird die Zurröse in einem Halter, der sich aus einem Befestigungsbereich und einem Widerlagerbereich zusammensetzt. Der Befestigungsbereich ist an dem Rahmenprofil der Nutzfahrzeug-Ladefläche verschraubt. Der einstückig mit dem Befestigungsbereich ausgebildete Widerlagerbereich des Halters weist ein nach unten offenes Widerlager auf, an dem sich bei Zugbelastung der untere Ringabschnitt der Zurröse abstützt.

Bei einer Zurrgurtbefestigung wie in der DE 94 15 316 U1 beschrieben besteht grundsätzlich die Gefahr, dass sich die Zurröse ungewollt aus dem Halter löst, etwa im Fall eines ungünstigen Krafteinleitungswinkels an der Zurröse oder bei einem starken Verkanten. Daher beschreibt die DE 94 15 316 U1 Maßnahmen, um durch eine aufeinander abgestimmte Gestaltung des Halters und des umgebenden Rahmenprofils ein Lösen der Zurröse vom Halter zu verhindern. Unter anderem greift ein an dem Halter ausgebildeter Haken in eine speziell für diesen Zweck vorhandene Nut in dem fahrzeugseitig vorhandenen Rahmenprofil. Eine solche Zurrgurtbefestigung erfordert zusätzliche Montageschritte, zudem ist der Nutzfahrzeughersteller gezwungen, sich für ein spezielles und unter Umständen teures Rahmenprofil zu entscheiden.

Weitere Zurrgurtbefestigungen sind aus der US 5,788,437 und der EP 0 179 733 A2 bekannt.

Der Erfindung liegt die Aufgabe zugrunde, eine mit einer ringförmigen Zurröse zur Befestigung eines Ladungssicherungsgurtes versehene Zurrgurtbefestigung zu schaffen, die aus wenigen Teilen einfach montierbar ist, ohne dass die Gefahr eines Lösens der Zurröse besteht.

Zur Lösung wird bei einer Zurrgurtbefestigung der eingangs genannten Art vorgeschlagen, dass jeder Durchtritt nach fahrzeugaußen durch die Wand des Profils, und nach fahrzeuginnen durch einen Materialabschnitt des Widerlagerbereichs begrenzt wird, welcher parallel versetzt zu dem Widerlager angeordnet ist.

Eine solcherart ausgebildete Zurrgurtbefestigung besteht im Wesentlichen aus zwei Einzelteilen, nämlich der als geschlossener Ring ausgebildeten Zurröse, sowie einem Halter für die Zurröse. Die zwei Teile lassen sich sehr einfach montieren, indem sie lediglich ineinander eingehängt werden, und sodann der Halter an der Wand, vorzugsweise der vertikalen Innenwand, des Profils befestigt wird. Ein späteres Lösen der Zurröse aus dem Halter, etwa bei einem ungünstigen Winkel der Krafteinleitung oder bei einem starken Verkanten, ist ausgeschlossen. Denn der Widerlagerbereich des Halters weist in Verlängerung des Widerlagers jeweils einen Durchtritt für den vertikalen Ringabschnitt der Zurröse auf, wobei dieser Durchtritt nach fahrzeugaußen durch die Wand des Profils, und nach fahrzeuginnen durch einen Materialabschnitt begrenzt wird, welcher parallel versetzt zu dem Widerlager angeordnet ist, Aufgrund dieser Ausgestaltung ist ein ungewolltes Lösen der Zurröse aus dem Halter ausgeschlossen, und zwar selbst im Fall eines ungünstigen Krafteinleitungswinkels an der Zurröse oder im Fall eines starken Verkantens. Die Zurröse ist unverlierbar in dem Halter "gefangen", sobald dieser an der Wand des Rahmenprofils befestigt ist. Dabei ist keine spezielle Gestaltung des fahrzeugseitig vorhandenen Rahmenprofils erforderlich, was dem Fahrzeugbauer die größtmögliche Freiheit gibt.

Bevorzugte Ausgestaltungen einer solchen Zurrgurtbefestigung sind in den Unteransprüchen angegeben.

Gemäß einer ersten Ausgestaltung weist der Materialabschnitt einen Querschnitt mit größerer Höhe als Tiefe auf, um so die Festigkeit des Widerlagerbereichs des Halters nicht nur in dessen Zentralbereich, sondern auch zu den Enden hin zu erhöhen.

Mit einer weiteren Ausgestaltung wird vorgeschlagen, dass sich der Befestigungsbereich von dem Widerlager aus nach unten hin erstreckt, und eine Breite aufweist, die durchgehend geringer ist, als die Innenweite der Zurröse zwischen deren vertikalen Ringabschnitten. Durch diese Ausgestaltung ist es bei der Montage der Zurrgurtbefestigung ohne weitere Befestigungsmittel oder Befestigungsschritte möglich, die Zurröse zunächst über den Befestigungsbereich des Halters zu ziehen, bis beide Teile die richtige Montageposition zueinander einnehmen. Sodann ist nur noch der Halter gegen das Profil zu befestigen, ohne dass der Zurröse noch weitere Beachtung zu schenken ist.

Gemäß einer weiteren Ausgestaltung weist der Befestigungsbereich über seine vertikale Erstreckung unterschiedliche horizontale Tiefen auf, wobei die Tiefe unmittelbar unterhalb des Widerlagers geringer ist, als die Tiefe in einem weiter unten angeordneten, mindestens eine Verschraubung aufnehmenden Abschnitt.

Gemäß einer weiteren Ausgestaltung setzt sich das Widerlager aus einem mittleren Widerlagerabschnitt, gegen den bei auf Zug belasteter Zurröse deren unterer Ringabschnitt anliegt, und jeweils in Fluchtung zu dem mittleren Widerlagerabschnitt angeordneten äußeren Widerlagerabschnitten zusammen, wobei die äußeren Widerlagerabschnitte ausschließlich über den parallel versetzt zu dem Widerlager angeordneten Materialabschnitt mit dem mittleren Widerlagerabschnitt in Verbindung stehen, und wobei die Zurröse in Verlängerung des unteren Ringabschnitts mit über den jeweiligen vertikalen Ringabschnitt hinaus sich erstreckenden, zapfenartigen Verlängerungen versehen ist, die bei auf Zug belasteter Zurröse gegen die äußeren Widerlagerabschnitte anliegen.

Gemäß einer weiteren Ausgestaltung ist die Oberseite des Widerlagerbereichs einschließlich seines zentralen Lagerabschnitts und seiner beiden äußeren Lagerabschnitte als eine nach oben hin offene Schale geformt ist, in der bei unbelasteter Zurröse deren oberer Ringabschnitt zur Anlage kommt.

Weitere Vorteile und Einzelheiten der erfindungsgemäßen Zurrgurtbefestigung werden nachfolgend unter Bezugnahme auf die beigefügten Zeichnungen erläutert. Darin zeigen:
- Fig. 1: in einem vertikalen Schnitt eine an einem Profil, hier einem Abschlussprofil, einer Ladefläche montierte Zurrgurtbefestigung;
- Fig. 2: eine Draufsicht auf die Gegenstände nach Fig. 1;
- Fig. 3: ein Horizontalschnitt durch das Profil und die Zurrgurtbefestigung;
- Fig. 4: einen Vertikalschnitt gemäß der in Fig. 3 mit IV bezeichneten Schnittebene;
- Fig. 5: einen Vertikalschnitt gemäß der in Fig. 3 mit V bezeichneten Schnittebene;
- Fig. 6: einen Vertikalschnitt gemäß der in Fig. 3 mit VI bezeichneten Schnittebene;
- Fig. 7: in perspektivischer Darstellung die aus einem Halter und einer Zurröse bestehende Zurrgurtbefestigung und
- Fig. 8: in anderer perspektivischer Darstellung die aus einem Halter und einer Zurröse bestehende Zurrgurtbefestigung.

Die Zeichnung zeigt jeweils den Randbereich einer Ladefläche 1 eines Nutzfahrzeugs. Zur Sicherung der auf der Ladefläche 1 lagernden Stückgüter gegen ein Verrutschen während der Fahrt sind längs der Ränder der Ladefläche 1 mehrere Zurrgurtbefestigungen angeordnet. Durch jede Zurrgurtbefestigung lässt sich ein zur Aufnahme von Zugkräften geeigneter, über die zu sichernde Ladung geführter Gurt hindurchführen. Dieser wir anschließend mittels geeigneter Spannmittel verzurrt und sichert so die Ladung.

Die Ladefläche 1 setzt sich aus einzelnen Bodenplatten 2 zusammen, die längs des Rands der Ladefläche auf einem Auflagewinkel 4 abgestützt sind. Bei dem hier beschriebenen Ausführungsbeispiel ist der Auflagewinkel 4 Bestandteil eines zugleich die Ladefläche seitlich begrenzenden Profils 3. Ein solches Rahmenprofil oder Abschlussprofil 3 befindet sich bei Nutzfahrzeugen entlang des einen Längsrandes der Ladefläche, wobei ein weiteres, spiegelbildliches Abschlussprofil 3 entlang des anderen Längsrandes der Nutzfahrzeug-Ladefläche angeordnet ist.

Bestandteile des Profils 3 sind üblicherweise ein vertikaler Profilschenkel 5, welcher gleichzeitig die Außenseite der Fahrzeug-Ladefläche definiert, sowie ein kürzerer horizontaler Profilschenkel 6, welcher im Wesentlichen mit der Ladefläche 1 fluchtet. In gewissen Längsabständen ist der horizontale Profilschenkel 6 mit schlitzartigen Öffnungen 9 oder entsprechend gestalteten Ausnehmungen versehen. Diese Öffnungen 9 bieten Platz für den Durchtritt jeweils einer Zurröse 10, die als ein starrer, geschlossener Ring aus einem unteren Ringabschnitt 11, einem oberen Ringabschnitt 12 sowie vertikalen Ringabschnitten 13B, 13C ausgebildet ist. Durch die Zurröse lässt sich zur Ladungssicherung ein Band oder Gurt hindurchführen, welches bzw. welcher über die zu sichernde Ladung gezogen und anschließend mittels geeigneter Spanneinrichtungen festgezurrt wird.

Zur Aufnahme der mit dem Festzurren einhergehenden Widerlagerkräfte dient ein innen in dem Rahmen- bzw. Abschlussprofil 3 befestigter Halter 20 für die Zurröse 10. Funktional betrachtet, setzt sich der Halter 20 einstückig aus einem Befestigungsbereich 21 und oberhalb einem Widerlagerbereich 22 zusammen.

Der Befestigungsbereich 21 des Halters 20 ist innen an der durch den vertikalen Profilschenkel 5 gebildeten Wand 7 des Profils 3 befestigt, vorzugsweise durch zwei Verschraubungen 23.

An seinem oberen Ende geht der Befestigungsbereich 21 einstückig in den Widerlagerbereich 22 über. Der Widerlagerbereich 22 weist jenes Widerlager 25, 25B, 25C auf, gegen das bei auf Zug belasteter Zurröse 10 die unteren Abschnitte der Zurröse 10 anliegen.

Das Widerlager ist nach unten offen, d. h. unter Last stützt es zwar den unteren Ringabschnitt 11 der Zurröse, aber es umschließt diesen nicht. Ist die Zurröse 10 daher nicht auf Zug belastet, fällt sie unter ihrem Eigengewicht herab, bis sie mit ihrem oberen Ringabschnitt 12 oben auf dem Widerlagerbereich 22 aufliegt. Damit in diesem Zustand kein Teil der Zurröse 10 über die Ebene der Ladefläche 1 nach oben vorsteht, ist die Oberseite des Widerlagerbereichs 22 als nach oben offene Schale 27 geformt, an deren Boden bei unbelasteter Zurröse der obere Ringabschnitt 12 der Zurröse zur Anlage kommt. Auf der Zeichnung ist die Zurröse 10 jedoch jeweils in ihrer angehobenen Laststellung wiedergegeben.

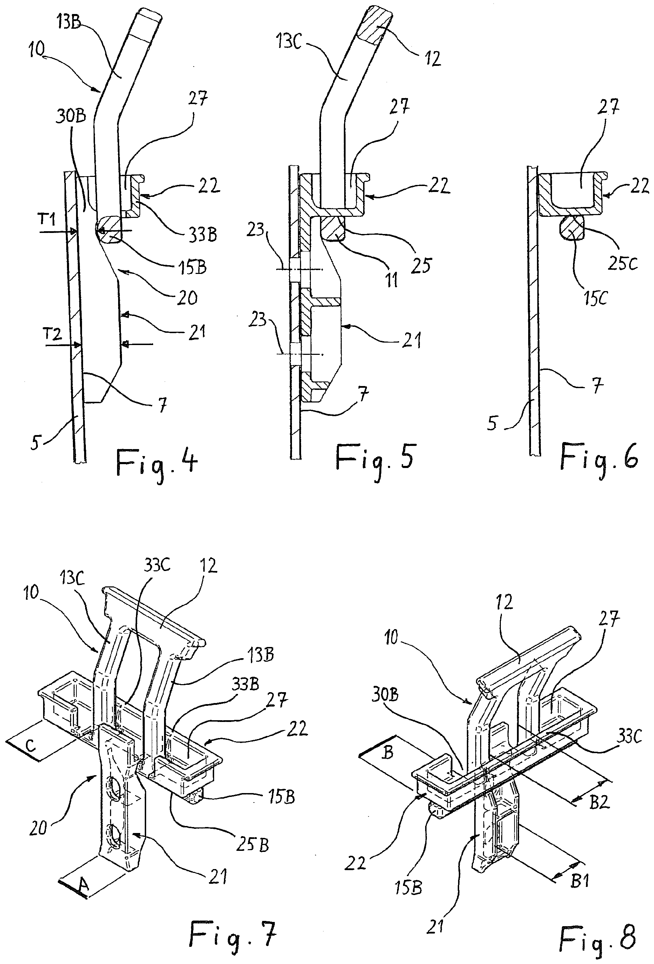

Der sich ausgehend von dem Widerlager 25 nach unten erstreckende Befestigungsbereich 21 des Halters 20 ist, wie vor allem Fig. 7 und Fig. 8 erkennen lassen, relativ schmal und insbesondere schmaler als die Zurröse 10. Der Befestigungsbereich 21 weist eine Breite B1 auf, die durchgehend geringer ist als die zwischen den beiden vertikalen Ringabschnitten 13B, 13C der Zurröse 10 gemessene Innenweite B2 der Zurröse. Auf diese Weise ist eine Montage der Zurrgurtbefestigung nur möglich, wenn die Zurröse 10 als geschlossener Ring vom unteren Ende des Befestigungsbereichs 21 aus über den Befestigungsbereich und längs des Befestigungsbereichs bis in den Widerlagerbereich 22 bewegt wird, wo die Zurröse 10 dann ihre Montageposition einnimmt, in der der Halter 20 in die Zurröse 10 eingehängt ist.

Die Zurröse 10 und der Halter 20 lassen sich ohne zusätzliche Verbindungsmittel oder Befestigungsschritte ineinander einhängen. Durch anschließendes einfaches Befestigen des Halters 20 an der Innenwand 7 ist die Zurröse 10 unverlierbar in dem Halter 20 gefangen. Die Zurröse 10 wieder aus dem Halter 20 zu entfernen gelingt nur, wenn zunächst der Halter wieder von der Innenwand 7 abgeschraubt wird.

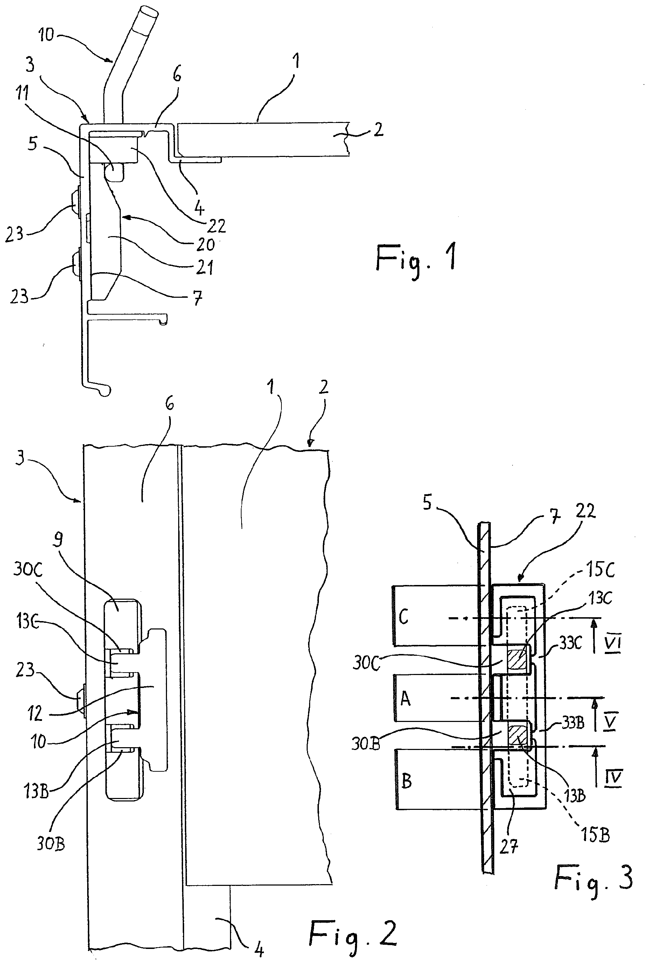

Um Platz für die zwei vertikalen Ringabschnitte 13B, 13C der Zurröse zu schaffen, weist der Widerlagerbereich 22 einen ersten vertikalen Durchtritt 30B und einen zweiten vertikalen Durchtritt 30C auf. Bei den beiden Durchtritten 30B, 30C handelt es sich um zu der Wand 7 des Abschlussprofils 3 hin offene Aussparungen in dem Widerlagerbereich 22. Die horizontal betrachtete Tiefe dieser Aussparungen 30B, 30C wird jeweils begrenzt durch einen Materialabschnitt 33B, 33C des Widerlagerbereichs 22. Daher ist, wie z. B. Fig. 3 in Verbindung mit Fig. 4 erkennen lässt, jeder Durchtritt 30B, 30C nach fahrzeugaußen durch die Innenwand 7, und nach fahrzeuginnen durch den betreffenden Materialabschnitt 33B, 33C begrenzt. Das Vorhandensein der Materialabschnitte 33B, 33C stellt daher gemeinsam mit dem zentralen Widerlager 25 sicher, dass die Zurröse 10 unverlierbar in dem Halter 20 "gefangen" ist, sobald dieser an der Innenwand 7 befestigt ist.

Indem die beiden Materialabschnitte 33B, 33C parallel und versetzt zu dem Widerlager 25, 25B, 25C, also dem Ort der eigentlichen Abstützung der belasteten Zurröse 10 an dem Widerlagerbereich 22, angeordnet sind, bilden die Materialabschnitte 33B, 33C eine Brücke zwischen einem mittleren Lagerabschnitt A und jeweils einem äußeren Lagerabschnitt B, C des Widerlagerbereichs 22. Der zentrale Lagerabschnitt A ist in Verlängerung zu dem Befestigungsbereich 21 angeordnet, hat in etwa dieselbe Breite B1 wie dieser und weist an seiner Unterseite den mittleren Widerlagerabschnitt 25 auf.

Die zwei äußeren Lagerabschnitte B, C haben die Aufgabe, das Widerlager insgesamt zu verlängern. Zu diesem Zweck ist der untere Ringabschnitt 11 der Zurröse 10 mit über den jeweiligen vertikalen Ringabschnitt 13B, 13C hinaus sich erstreckenden, zapfenartigen Verlängerungen 15B bzw. 15C versehen. Durch die Verlängerungen 15B, 15C erhält die Zurröse 10 unter Last eine erhöhte Seitenstabilität, indem bei auf Zug belasteter Zurröse 10 die Verlängerungen 15B, 15C gegen an den äußeren Lagerabschnitten B, C ausgebildete, nach unten offene Widerlagerabschnitte 25B, 25C anliegen. Die äußeren Widerlagerabschnitte 25B, 25C sind daher in Verlängerung zu dem zentralen Widerlagerabschnitt 25 angeordnet, von diesem jedoch durch die Aussparungen bzw. Durchtritte 30B, 30C getrennt.

Da die Durchtritte 30B, 30C prinzipiell zu einer Schwächung der Festigkeit des Widerlagerbereichs 22 führen, sollte jeder der beiden eine Materialbrücke bildenden Materialabschnitte 33B, 33C einen möglichst großen Querschnitt aufweisen. Von Vorteil ist, wenn dieser Querschnitt gemäß Fig. 4 eine Höhe aufweist, die größer als seine horizontal betrachtete Tiefe ist.

### Bezugszeichenliste

- 1: Ladefläche
- 2: Bodenplatte
- 3: Profil, Abschlussprofil
- 4: Auflagewinkel
- 5: vertikaler Profilschenkel
- 6: horizontaler Profilschenkel
- 7: Wand
- 9: Öffnung
- 10: Zurröse
- 11: unterer Ringabschnitt
- 12: oberer Ringabschnitt
- 13B: vertikaler Ringabschnitt
- 13C: vertikaler Ringabschnitt
- 15B: zapfenartige Verlängerung
- 15C: zapfenartige Verlängerung
- 20: Halter
- 21: Befestigungsbereich
- 22: Widerlagerbereich
- 23: Verschraubung
- 25: Widerlager, mittlerer Widerlagerabschnitt
- 25B: äußerer Widerlagerabschnitt
- 25C: äußerer Widerlagerabschnitt
- 27: Schale
- 30B: Aussparung, Durchtritt
- 30C: Aussparung, Durchtritt
- 33B: Materialabschnitt
- 33C: Materialabschnitt

- A: mittlerer Lagerabschnitt
- B: äußerer Lagerabschnitt
- B1: Breite
- B2: Innenweite
- C: äußerer Lagerabschnitt
- T1: Tiefe
- T2: Tiefe

## Patentansprüche

1. Zurrgurtbefestigung an einer Ladefläche, vorzugsweise einer Nutzfahrzeug-Ladefläche, mit einer durch eine Öffnung (9) oder Ausnehmung in einem Profil (3), welches Teil der Ladefläche ist, hindurchführbaren Zurröse (10), die als geschlossener Ring aus einem unteren Ringabschnitt (11), einem oberen Ringabschnitt (12) sowie vertikalen Ringabschnitten (13B, 13C) ausgebildet ist, und einem aus einem Befestigungsbereich (21) und einem Widerlagerbereich (22) bestehenden Halter (20), wobei der Befestigungsbereich (21) an einer Wand (7) des Profils (3) lösbar befestigbar ist, vorzugsweise durch Verschrauben, der Befestigungsbereich (21) an seinem oberen Ende mit dem Widerlagerbereich (22) verbunden ist, der Widerlagerbereich (22) ein nach unten offenes Widerlager (25, 25B, 25C) zur Anlage des unteren Ringabschnitts (11) bei auf Zug belasteter Zurröse (10) aufweist, und der Widerlagerbereich (22) in Verlängerung des Widerlagers (25, 25B, 25C) jeweils einen Durchtritt (30B, 30C) für den vertikalen Ringabschnitt (13B, 13C) aufweist, **dadurch gekennzeichnet, dass** jeder Durchtritt (30B, 30C) nach fahrzeugaußen durch die Wand (7) des Profils (3), und nach fahrzeuginnen durch einen Materialabschnitt (33B, 33C) des Widerlagerbereichs (22) begrenzt wird, welcher parallel versetzt zu dem Widerlager (25, 25B, 25C) angeordnet ist.

2. Zurrgurtbefestigung nach Anspruch 1, **dadurch gekennzeichnet, dass** der Materialabschnitt (33B, 33C) einen Querschnitt mit größerer Höhe als Tiefe aufweist.

3. Zurrgurtbefestigung nach Anspruch 1 oder 2, **dadurch gekennzeichnet, dass** sich der Befestigungsbereich (21) von dem Widerlager (25) aus nach unten hin erstreckt, und eine Breite (B1) aufweist, die durchgehend geringer ist, als die Innenweite (B2) der Zurröse (10) zwischen deren vertikalen Ringabschnitten (13B, 13C).

4. Zurrgurtbefestigung nach Anspruch 3, **dadurch gekennzeichnet, dass** der Befestigungsbereich (21) über seine Erstreckung unterschiedliche Tiefen aufweist, wobei die Tiefe (T1) unmittelbar unterhalb des Widerlagers (25) geringer ist, als die Tiefe (T2) in einem weiter unten angeordneten, mindestens eine Verschraubung (23) aufnehmenden Abschnitt.

5. Zurrgurtbefestigung nach einem der vorangehenden Ansprüche, **dadurch gekennzeichnet, dass** sich das Widerlager (25, 25B, 25C) aus einem mittleren Widerlagerabschnitt (25), gegen den bei auf Zug belasteter Zurröse (10) deren unterer Ringabschnitt (11) anliegt, und jeweils in Fluchtung zu dem mittleren Widerlagerabschnitt (25) angeordneten äußeren Widerlagerabschnitten (25B, 25C) zusammensetzt, wobei die äußeren Widerlagerabschnitte (25B, 25C) ausschließlich über den parallel versetzt zu dem Widerlager (25, 25B, 25C) angeordneten Materialabschnitt (33B, 33C) mit dem mittleren Widerlagerabschnitt (25) in Verbindung stehen, und wobei die Zurröse (10) in Verlängerung des unteren Ringabschnitts (11) mit über den jeweiligen vertikalen Ringabschnitt (13B, 13C) hinaus sich erstreckenden, zapfenartigen Verlängerungen (15B, 15C) versehen ist, die bei auf Zug belasteter Zurröse (10) gegen die äußeren Widerlagerabschnitte (25B, 25C) anliegen.

6. Zurrgurtbefestigung nach Anspruch 5, **dadurch gekennzeichnet, dass** die Oberseite des Widerlagerbereichs (22) einschließlich seines zentralen Lagerabschnitts (A) und seiner beiden äußeren Lagerabschnitte (B, C) als eine nach oben hin offene Schale (27) geformt ist, in der bei unbelasteter Zurröse (10) deren oberer Ringabschnitt (12) zur Anlage kommt.

## Claims

1. Lashing-strap mount on a load bed, preferably a commercial-vehicle load bed, having a lashing eye (10) that is able to be passed through an opening (9) or cutout in a profile (3), which is part of the load bed, and is formed from a lower ring portion (11), an upper ring portion (12) and vertical ring portions (13B, 13C), and having a holder (20) that consists of a mounting region (21) and a counter-bearing region (22), wherein the mounting region (21) is able to be releasably mounted on a wall (7) of the profile (3), preferably by screwing, the mounting region (21) is connected at its upper end to the counter-bearing region (22), the counter-bearing region (22) has a downwardly open counter bearing (25, 25B, 25C) for the lower ring portion (11) to bear against when the lashing eye (10) is under tensile load, and the counter-bearing region (22) has, in continuation of the counter bearing (25, 25B, 25C), in each case a passage (30B, 30C) for the vertical ring portion (13B, 13C), **characterized in that** each passage (30B, 30C) is bounded toward the outside of the vehicle by the wall (7) of the profile (3) and toward the inside of the vehicle by a material portion (33B, 33C) of the counter-bearing region (22), which is arranged in a manner offset parallel to the counter bearing (25, 25B, 25C).

2. Lashing-strap mount according to Claim 1, **characterized in that** the material portion (33B, 33C) has a cross section with a greater height than depth.

3. Lashing-strap mount according to Claim 1 or 2, **characterized in that** the mounting region (21) extends downwardly from the counter bearing (25) and has a width (B1) which is consistently less than the inside width (B2) of the lashing strap (10) between the vertical ring portions (13B, 13C) thereof.

4. Lashing-strap mount according to Claim 3, **characterized in that** the mounting region (21) has different depths along its extent, wherein the depth (T1) is less immediately beneath the counter bearing (25) than the depth (T2) in a portion that is arranged further down and receives at least one screw connection (23).

5. Lashing-strap mount according to one of the preceding claims, **characterized in that** the counter bearing (25, 25B, 25C) is made up of a central counter-bearing portion (25), against which the lower ring portion (11) of the lashing eye (10) bears with said lashing eye (10) under tensile load, and outer counter-bearing portions (25B, 25C) that are each arranged in alignment with the central counter-bearing portion (25), wherein the outer counter-bearing portions (25B, 25C) are connected to the central counter-bearing portion (25) only via the material portion (33B, 33C) that is arranged in a manner offset parallel to the counter bearing (25, 25B, 25C), and wherein the lashing eye (10) is provided, in continuation of the lower ring portion (11), with peg-like extensions (15B, 15C) that extend beyond the respective vertical ring portions (13B, 13C) and bear against the outer counter-bearing portions (25B, 25C) with the lashing eye (10) under tensile load.

6. Lashing-strap mount according to Claim 5, **characterized in that** the top side of the counter-bearing region (22), including the central bearing portion (A) thereof and the two outer bearing portions (B, C) thereof, is in the shape of an upwardly open cup (27), in which the upper ring portion (12) of the lashing eye (10) comes to bear with the latter not under load.

## Revendications

1. Fixation de sangle d'arrimage à une surface de chargement, de préférence à une surface de chargement de véhicule utilitaire, avec un oeillet d'arrimage (10) pouvant passer à travers une ouverture (9) ou un évidement dans un profilé (3) qui fait partie de la surface de chargement, qui est réalisé sous la forme d'un anneau fermé composé d'une partie d'anneau inférieure (11), d'une partie d'anneau supérieure (12) ainsi que de parties d'anneau verticales (13B, 13C), et avec un support (20) se composant d'une région de fixation (21) et d'une région d'appui (22), dans lequel la région de fixation (21) peut être fixée de façon séparable à une paroi (7) du profilé (3), de préférence par vissage, la région de fixation (21) est assemblée à son extrémité supérieure à la région d'appui (22), la région d'appui (22) présente un appui ouvert vers le bas (25, 25B, 25C) pour l'appui de la partie d'anneau inférieure (11) lorsque l'oeillet d'arrimage (10) est chargé en traction, et la région d'appui (22) présente dans le prolongement de l'appui (25, 25B, 25C) respectivement un passage (30B, 30C) pour la partie d'anneau verticale (13B, 13C), **caractérisée en ce que** chaque passage (30B, 30C) est limité vers l'extérieur du véhicule par la paroi (7) du profilé (3) et vers l'intérieur du véhicule par une partie de matière (33B, 33C) de la région d'appui (22), qui est disposée de façon décalée parallèlement par rapport à l'appui (25, 25B, 25C).

2. Fixation de sangle d'arrimage selon la revendication 1, **caractérisée en ce que** la partie de matière (33B, 33C) présente une section transversale d'une hauteur plus grande que la profondeur.

3. Fixation de sangle d'arrimage selon la revendication 1 ou 2, **caractérisée en ce que** la région de fixation (21) s'étend à partir de l'appui (25) vers le bas, et présente une largeur (B1), qui est de bout en bout plus petite que la largeur intérieure (B2) de l'oeillet d'arrimage (10) entre ses parties d'anneau verticales (13B, 13C).

4. Fixation de sangle d'arrimage selon la revendication 3, **caractérisée en ce que** la région de fixation (21) présente sur son extension des profondeurs différentes, dans lequel la profondeur (T1) immédiatement en dessous de l'appui (25) est plus petite que la profondeur (T2) dans une partie disposée plus bas, comprenant au moins un assemblage vissé (23).

5. Fixation de sangle d'arrimage selon l'une quelconque des revendications précédentes, **caractérisée en ce que** l'appui (25, 25B, 25C) se compose d'une partie d'appui moyenne (25), contre laquelle la partie d'anneau inférieure (11) de l'oeillet d'arrimage (10) s'applique lorsque celui-ci est chargé en traction, et de parties d'appui extérieures (25B, 25C) disposées respectivement en alignement avec la partie d'appui moyenne (25), dans laquelle les parties d'appui extérieures (25B, 25C) sont en relation avec la partie d'appui moyenne (25) exclusivement par la partie de matière (33B, 33C) disposée de façon décalée parallèlement par rapport à l'appui (25, 25B, 25C), et dans laquelle l'oeillet d'arrimage (10) est muni dans le prolongement de la partie d'anneau inférieure (11) de prolongements en forme de pivots (15B, 15C) s'étendant au-delà de la partie d'anneau verticale respective (13B, 13C), qui s'appliquent contre les parties d'appui extérieures (25B, 25C) lorsque l'oeillet d'arrimage (10) est chargé en traction.

6. Fixation de sangle d'arrimage selon la revendication 5, **caractérisée en ce que** le côté supérieur de la région d'appui (22) y compris sa partie de palier centrale (A) et ses deux parties de palier extérieures (B, C) est réalisé sous la forme d'une coquille ouverte vers le haut (27), dans laquelle la partie d'anneau supérieure (12) de l'oeillet d'arrimage (10) vient s'appuyer lorsque celui-ci n'est pas chargé.
